# EUROPEAN PATENT SPECIFICATION

(11) **EP 4 110 694 B1**
(45) Date of publication and mention of the grant of the patent: **15.01.2025**
(21) Application number: 21706325.4
(22) Date of filing: 24.02.2021
(51) Int. Cl.: G01C 21/20, G05D 1/00, B64U 10/60

(54) **TETHERED UNMANNED AERIAL VEHICLE SYSTEM**
ANGEBUNDENES UNBEMANNTES LUFTFAHRZEUGSYSTEM
SYSTÈME DE VÉHICULE AÉRIEN SANS PILOTE ACCROCHÉ À UN CÂBLE

(30) Priority: 24.02.2020 EP 20159013
(43) Date of publication of application: 04.01.2023
(73) Proprietor: Arrowtec GmbH, 13629 Berlin (DE)
(72) Inventor: BENNER, Josua, 13509 Berlin (DE)
(74) Representative: Schulz Junghans Patentanwälte PartGmbB
(86) International application number: PCT/EP2021/054579
(87) International publication number: WO 2021/170667

(56) References cited:
- WO-A1-2014/102437
- FR-A1- 2 941 921
- US-A1- 2015 212 391
- US-A1- 2017 147 007

## Description

This application claims the benefit of the European patent application No. EP20159013.0 filed on February 24, 2020.

The invention relates to a tethered automatic unmanned aerial vehicle system.

US 2015/212391 A1 discloses a multi-copter that is attached to a tether, wherein an evaluation unit determines a tension in the tether and an acceleration of the multi-copter to derive an elevation angle. Further, an angle of incidence of the tether and gravity may be determined at the multi-copter, such as to determine from the detected angle an angular position of the multi-copter with respect to an operator.

US 2017/0147007 A1 discloses an unmanned aerial vehicle tethered to a substrate, wherein a tether sensor is mounted on the substrate. The tether sensor determines an orientation of the tether relative to the substrate. A micro controller, receiving the measured orientation from the tether sensor, determines an orientation of the tether relative to the substrate, and as a function of the orientation, determines a corrective value and outputs the corrective value to the unmanned aerial vehicle as at least one of a roll output and a pitch output control signal.

Unmanned aerial vehicles (UAV) for civil and military use are known in the art. For example, remote controlled multi-copters can be equipped with a variety of functional payloads such as cameras, heat sensors, communication sensors, lasers and the like for aerial monitoring, situational awareness, target acquisition and inspection.

These multi-copters have the advantage that they are easy to use, less expensive than manned aerial vehicles and require comparably little storage space.

Navigation typically relies on satellite-based positioning systems such as the global positioning system (GPS).

The UAV also comprises electronic components that are sensitive to the magnetic field such as a compass. The compass is of key importance for safe and controlled flight.

A drawback on such UAVs is that electromagnetic noise, e.g. due to signal jamming or spoofing, or bad signal transmission due to physical obstructions can cause the electric components for navigation to fail or can impair communication with the remote control for the UAV.

Under such circumstances the UAV becomes uncontrollable. Moreover, strong winds might be prohibitive for safe flight of the UAV.

In emergency applications however, it is crucial that a UAV can lift off independent of GPS signal reception, winds or electromagnetic noise.

An object of the present invention is to provide an aerial system that is capable to perform flight missions independent of environmental conditions. The object is achieved by the system having the features of claim 1 and a method with the features of claim 12.

Advantageous embodiments are provided by the dependent claims.

According to claim 1, a tethered automatic unmanned aerial vehicle system comprises at least the components:
- an unmanned aerial vehicle, wherein the unmanned aerial vehicle is a multi-copter,
- a ground station, particularly in form of a landing platform,
- a flexible tether such as a cable that is repeatedly connectable or that is mechanically connected, particularly tethered to the unmanned aerial vehicle and to the ground station, such that the unmanned aerial vehicle is tethered to the ground station,

wherein the unmanned aerial vehicle comprises an angle-sensor configured and arranged for determining an angle of incidence between the tether and gravity or a horizontal plane, when the tether is connected to the unmanned aerial vehicle, such that the angle-sensor and/or an evaluation module connected to said angle/sensor can determine at least an angular position of the unmanned aerial vehicle with respect to the ground station from the detected angle of incidence, particularly independent of an flight attitude of the unmanned aerial vehicle,
wherein the ground station is configured to preload the tether, when the system is in operation, such that the detected angle of incidence is indicative of the angular position of the unmanned aerial vehicle with respect to the ground station or gravity.

The system is characterized in that the ground station comprises a preload assembly with a movable member that is arranged in contact with the tether and that is configured to alter a tether path length of an adjustable tether path in the ground station, particularly wherein the movable member is rotatably mounted such that the member can rotate around an axis of the member, wherein the movable member is arranged translationally movable on a guide of the preload assembly that allows the tether path length in the ground station to be adjusted in length by moving the movable member along the guide, such that a load on the tether can be adjusted by moving the movable member.

The system according to the invention is capable for flight missions independent of an electromagnetic noise environment and/or an availability of a satellite-based positioning signal, such as a GPS signal. Moreover, even in strong wind conditions, the danger of a loss of the UAV is greatly reduced, as the tether connection secures the UAV against being blown away.

The term "unmanned aerial vehicle", short UAV, such as the term "multi-copter" particularly refer to a powered, aerial vehicle that does not carry a human operator and has rotary wings to provide vehicle lift. Particularly, the UAV is configured to be piloted remotely and to carry a payload, such as a camera, a heat sensor, a communication sensor, a laser and the like for aerial monitoring, situational awareness, target acquisition and inspection.

As the angle-sensor is arranged on the UAV - and not at the ground station - a solid angle providing information about a three-dimensional angle of incidence of the tether, particularly with respect to a horizontal plane, and thus a direction towards the ground station can be determined by the UAV.

According to another embodiment of the invention, the angle-sensor is further arranged and configured to determine a yaw angle with respect to a yaw axis of the UAV relative to the tether and thus relative to the direction of the ground station. The yaw axis particularly points vertically away with respect to the UAV, particularly opposite the gravitational pull. This embodiment particularly allows for compensating a flight attitude of the UAV relative to the horizontal plane and thus to determine the angle of incidence relative to the horizontal plane by adjusting for the determined yaw angle.

The term "ground station" particularly refers to a system comprising a landing platform and/or a remote control system for the UAV. Also, the ground station can comprise an evaluation module, such as a computer, for evaluating sensor data and/or signals of the components of the aerial system.

According to another embodiment of the invention, the UAV comprises a data storage configured to store and/or update a position of the ground station.

According to another embodiment of the invention, the tether is longer than 5m, particularly longer than 20 m, particularly longer than 100m, wherein a free tether length can be automatically adjusted by the system.

The tether has essentially no stiffness such that it is very flexible. Particularly, the tether is so flexible that it generates or has essentially no restoring forces when bent.

By preloading the tether, it is possible to increase the accuracy of the determined angle of incidence and thus the angular position determination.

According to another embodiment of the invention, the UAV and/or the ground station is configured to determine a relative altitude of the particularly flying UAV with respect to the ground station.

This is particularly possible by accounting for a free length of the tether between the UAV and the ground station and the angle of incidence.

Spherical coordinates can be used for determining the altitude of the UAV.

According to another embodiment, a height sensor and /or an ambient pressure sensor can be used for determining the flight altitude of the UAV.

According to another embodiment, the system, particularly the UAV and/or the ground station is configured to autonomously determine a three-dimensional position of the UAV with respect to the ground station, with the information about the free tether length and the angle of incidence.

According to this embodiment, no global or external positioning signals are needed to determine the relative position if the UAV.

According to another embodiment of the invention, the tether is connected to the unmanned aerial vehicle by an angle-adjustable mount assembly, such as a pivot assembly or a swivel assembly, wherein the angle-adjustable mount assembly comprises an inertial measurement unit, short IMU, wherein the angle-adjustable mount assembly is configured to map, particularly by means of a rigid mechanical connection or relation of the IMU and the mount assembly, the angle of incidence to the IMU such that the IMU assumes a corresponding angle with the angle-adjustable mount assembly, particularly wherein the IMU is connected to the tether.

This embodiment allows for precise determination of the angle of incidence. It is noted that the IMU is particularly not configured and arranged in the UAV to determine an orientation of the UAV in space, for which IMUs are used typically in UAVs.

The IMU is configured to determine the angle of incidence. The IMU is particularly configured to provide IMU data comprising the information about the angle of incidence to an evaluation on the UAV for further processing of IMU data.

According to another embodiment of the invention, the mount assembly and particularly the IMU is arranged rotatably on a ball-bearing and/or a gimbal that is configured to rotate at least around a roll and a pitch axis of the UAV. This allows compensating for a pitch and roll angle the UAV might assume, leaving the mount assembly unaltered and non-sensitive to the pitch and roll angle of the UAV. The UAV can for example adopt roll and pitch angles due to wind or its own flying motion.

The roll and pitch angle of the UAV are well-defined axis of the UAV and known the person skilled in the art. The roll axis particularly extends along a forward direction of the UAV, wherein the pitch axis particularly extends orthogonally to the roll and aw axis.

According to another embodiment of the invention, the angle-sensor comprises aa gyroscope and/or an optical sensor, particularly wherein the sensor is not an image sensor.

This embodiment allows for a quick, economic and reliable determination of the angle of incidence.

According to another embodiment of the invention, the optical sensor comprises an illumination module, such as an LED and a detection module, such as a quadrant diode.

According to another embodiment of the invention, the tether comprises a data cable for transmitting an angle-sensor signal, IMU data and/or angle-sensor data to the ground station.

According to another embodiment of the invention, the tether comprises a communication cable for transmitting control signals from a remote control that is particularly operated by an operator to the UAV.

This embodiment allows for secure and interference-free transmission of control signals to the UAV. Thus, even in high-electromagnetic noise environments the UAV is capable to receive and detect the control signals from the remote control.

The communication and/or the data cable might comprise a coating for shielding the communication and/or data cable from electromagnetic noise.

According to another embodiment of the invention, the tether comprises an electricity supply cable that is configured to provide electricity to the UAV for flying and operation.

This allows for an extended and temporal almost unlimited use of the UAV, as compared to battery-driven UAVs.

According to another embodiment of the invention, the evaluation module arranged on the UAV is configured to evaluate the angle-sensor data and/or the IMU data. The evaluated data are then transmitted via the appropriate cable or by a RF-transmission module to the ground station and/or to the remote control to adjust a position and/or orientation of the UAV.

According to another embodiment of the invention, the tether is configured to transmit sensor data from an additional sensor such as a camera or a telemetry-system to the ground station.

According to another embodiment of the invention, the ground station comprises a rotatably mounted tether drum configured to roll up and to roll off the tether from the tether drum such as to adjust the free tether length of the tether between the unmanned aerial vehicle and the ground station.

This embodiment allows for a variable use of the system and also for compact storage of the tether.

According to another embodiment of the invention, the preload assembly with the movable member is arranged in contact with the tether.

The preload assembly may serve for an ordered winding and unwinding from a tether drum, which allows for a faultless functioning for the system during operation.

According to a further embodiment of the invention, the movable member is rotatably mounted such that the member can rotate around an axis of the member, particularly wherein the movable member is arranged between an opening of the ground station through which the tether exits the ground station towards the unmanned aerial vehicle and the tether drum.

According to another embodiment of the invention, the guide extends vertically and the movable member moves vertically along the guide of the preload assembly that allows the tether path length in the ground station, particularly the tether path length between tether the drum and the opening in the ground station to be adjusted in length by moving the movable member along the guide, such that a load on the tether can be adjusted by moving the movable member.

This embodiment allows for facile, robust and efficient realization of the movable member.

According to another embodiment of the invention, the movable member, particularly a shaft or a wheel, is rotatably mounted such that the member can rotate around an axis of the member, particularly wherein the movable member is arranged between an opening of the ground station through which the tether exits the ground station towards the unmanned aerial vehicle and the tether drum, wherein the movable member is arranged translationally movable on the guide, particularly wherein the guide extends vertically and the movable member moves vertically along the guide of the preload assembly that allows the tether path length in the ground station, particularly the tether path length between tether the drum and the opening in the ground station to be adjusted in length by moving the movable member along the guide, such that a load on the tether can be adjusted by moving the movable member.

Particularly, the movable member is in constant contact with the tether independent of the position of the tether.

This embodiment provides a robust and easy way to precisely control a preload of the tether with a short reaction time.

Moreover, this embodiment allows for adjusting the preload of the tether without the need to engage in a tether drum activation (roll up or roll down), which renders the system more energy efficient.

According to another embodiment of the invention, the movable member is formed as an elongated shaft.

According to another embodiment of the invention, the movable member is a wheel that is in contact with the tether at a rim portion of the wheel, particularly wherein the wheel comprises a circumferential recess that serves as a guide for the tether.

According to another embodiment of the invention, the tether is arranged such in the ground station that it extends from the tether drum downward, then extends around a lower portion, i.e. a ground facing portion of the movable member, particularly wherein the tether extends between ground and the axis of the movable member, and then upwards through the receiving opening of the ground station.

According to another embodiment of the invention, the movable member is spring loaded, such that a spring force from a spring of the preload assembly pushes the movable member onto the tether. The preload assembly is particularly a spring assembly.

According to another embodiment of the invention, the preload assembly comprises at least one position sensor for example in form of a distance sensor or an infrared sensor configured to determine a position of the movable member in the guide.

According to another embodiment of the invention, the preload assembly comprises a load sensor configured to determine a tether load of the tether between the ground station and the UAV, wherein the system is configured to adjust the tether load for example by moving the movable member the along the guide, or by rolling up or rolling down the tether from the tether drum, particularly in response to the determined tether load, such that the tether load remains higher than a predefined minimum tether load.

According to another embodiment of the invention, the preload of the tether is adjusted by a weight of the movable member weight in connection with gravity.

According to another embodiment of the invention, the preload assembly comprises a load sensor, wherein the load sensor is configured such that the tether load is determined with the load sensor arranged at the ground station.

According to another embodiment of the invention, the preload assembly comprises a spring damping assembly, wherein the spring damping assembly is configured such that the tether load is determined with the load sensor arranged at the ground station.

According to another embodiment of the invention, the tether path inside the ground station exhibits a local minimum located such in the tether path that a fluid, such as water, on the tether accumulates at the minimum for dripping off at the minimum, particularly wherein said minimum is located between the tether drum and the receiving opening of the ground station, particularly wherein the local minimum is adopted at the movable member.

This embodiment combines the preload control with a fluid drop-off arrangement.

According to another embodiment of the invention, the ground station is arranged or comprised by a vehicle, such as a car or a ship.

This embodiment provides a versatile aerial system that can be transported to an operation site by the vehicle.

The system is particularly further configured to be operatable with the ground station on the vehicle.

According to another embodiment of the invention, the system is configured to be operated during motion of the vehicle comprising the ground station.

The term "operated" in the context of this embodiment particularly includes a state of the system during which the unmanned aerial vehicle is flying. An operator for the UAV can in the vehicle.

According to another embodiment of the invention, the system is configured to drag the unmanned aerial vehicle in the air behind the vehicle comprising the ground station.

According to another embodiment of the invention, the ground station comprises a receiving opening for the tether through which the tether exits (and enters) the ground station towards the unmanned aerial vehicle, wherein at the receiving opening the ground station comprises a centering channel extending essentially vertically from the receiving opening, wherein the centering channel is configured to receive an elongated member attached to the unmanned aerial vehicle such that a lateral position of the unmanned aerial vehicle is stabilized during landing, particularly wherein the centering channel is a funnel.

The elongated member of the UAV extends essentially downwards form the UAV, i.e. towards the ground, particularly when no force is applied to the elongated member.

The assembly formed by the centering channel and the elongated member of the UAV allows for a landing aid for the UAV on the ground station even during adverse, i.e. gusty weather conditions.

According to another embodiment of the invention, the elongated member is rigidly coupled to the angle-sensor, particularly the IMU such that the angle-sensor adopts the same or a corresponding orientation as the elongated member.

According to another embodiment of the invention, the elongated member is attached to a bearing, particularly a ball-bearing or a gimbal such that it can assume any angle of incidence.

According to another embodiment of the invention, the tether is attached, particularly with a first end to the elongated member, particularly to a first end of the elongated member, such that the landing procedure can be performed by shortening the free tether path length. Centering of the UAV with respect to the ground station is facilitated by design of said assembly.

According to another embodiment of the invention, the elongated member has a length between 20 cm and 100 cm.

According to another embodiment of the invention, the centering channel comprises a ball bearing at the channel walls for holding the elongated member at reduced friction.

According to another aspect of the invention, a method for operating a tethered unmanned aerial vehicle, particularly a multi-copter, with a system according the invention is provided, wherein the method comprises at least the steps of:
- Particularly taking-off with the UAV from the ground station,
- Determining an angle of incident of the tether on the UAV,
- Determining a free tether length between the UAV and the ground station at the ground station and/or at the UAV,
- Determining from the angle of incidence and the free tether length a three-dimensional position of the UAV with respect to the ground station.

According to another embodiment of the invention, the method further comprises the step of adjusting a determined tether load such that the determined tether load is larger than a minimum tether load.

According to another embodiment of the invention, the tether load is adjusted with the preload assembly of the ground station.

Terms and definitions provided for the system are particularly applicable to the method in the same fashion and vice versa.

The system and method according to the invention solves several problems in the art. For example, there is no limitation of operation environments due to weather or electromagnetic noise or due to the absence of a global positioning system signal e.g. due to buildings or other physical obstructions.

The system according to the invention is particularly well-suited for applications in the civil and military sector. Moreover, in the field of physical security, the system can be used to protect critical infrastructure, such as chemical plants, power stations and wastewater treatment plants, as well as pipelines, railway lines and borders, with a minimum of personnel. Inspection and monitoring tasks for wind farms or railway lines are also conceivable.

For the vehicle-associated field of application, i.e. the ground station being arranged on or attached to a vehicle, the application areas cover for example situation overview, e.g. major events, driving patrol, as well as communication intelligence or electronic intelligence, target detection, as well as monitoring and inspection. The system according to the invention is configured to operate independently of GPS positioning or image positioning and is not disturbed by signal jamming or spoofing.

Furthermore, during flight the UAV can be automatically pulled behind a vehicle while keeping a predefined position relative to the vehicle / ground station on the vehicle.

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.
- Fig. 1: a schematic drawing of the aerial system according to the invention when the multi-copter is flying;
- Fig. 2: a schematic drawing of the aerial system according to the invention when the multi-copter is landed;
- Fig. 3: a schematic drawing of the aerial system according to the invention with a different preload assembly;
- Fig. 4: a detailed schematic view of the angle-adjustable mount assembly for two different situations;
- Fig. 5: a schematic drawing of a centering structure; and
- Fig. 6: a schematic drawing of the preload assembly.

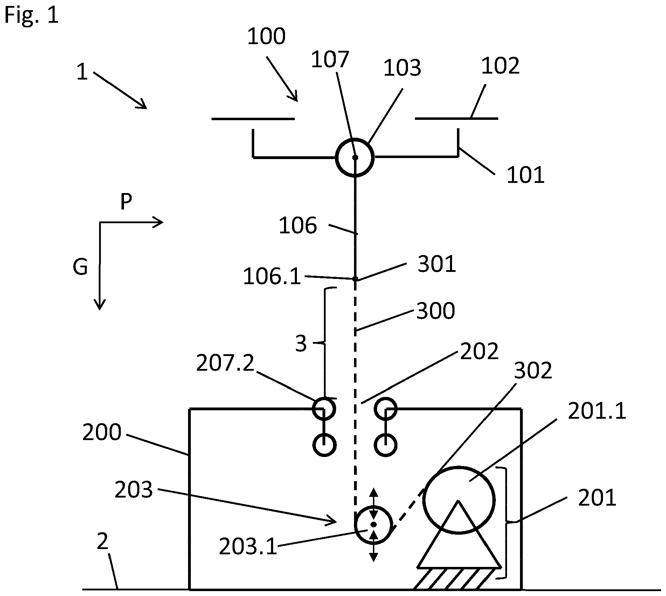

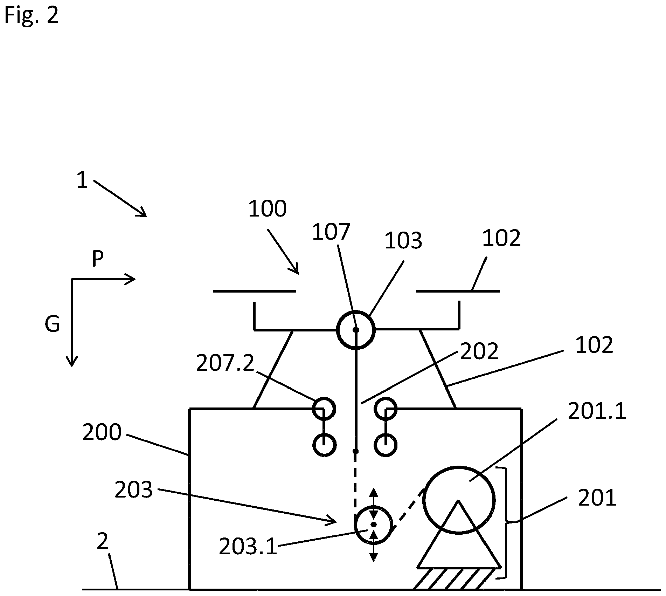

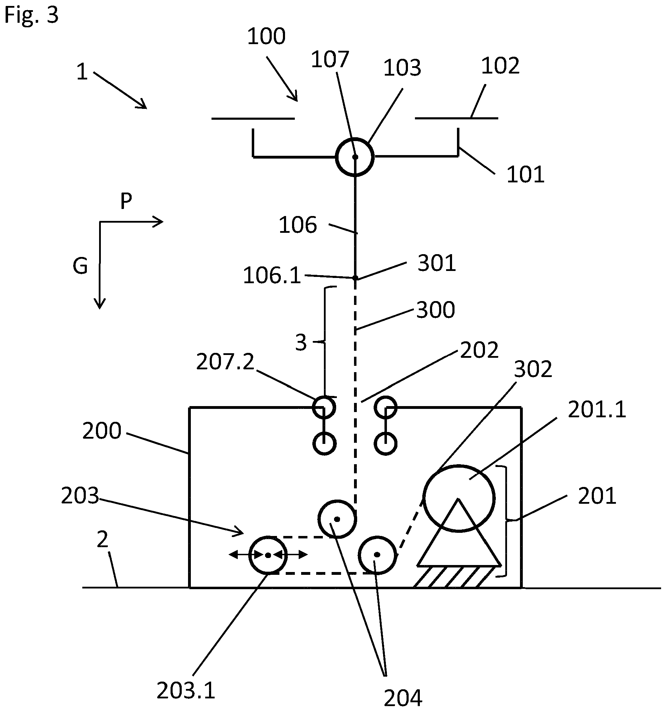

In Figs 1 to 4 several embodiments of the system 1 according to the invention is shown. The system 1 comprises an unmanned aerial vehicle (UAV) 100 in form of a multi-copter 100. The multi-copter 100 is configured to hover (Fig. 1) as well as to fly directionally. The multi-copter 100 can be a quadro-, hexa-, octa-, or a multi-copter with even more rotors 102 or rotor bearing arms 101. The UAV can also be a VTOL (Vertical Take-Off and Landing vehicle), i.e. a multi-copter having non-rotatory wings for directional flight. The multi-copter 100 can have a landing gear 108 (cf. Fig. 2), wherein said landing gear 108 is particularly automatically raised or stowed once the multi-copter 100 is in the air.

The multi-copter 100 is tethered to a ground station 200 be means of a tether 300 that extends between the multi-copter 100 and the ground station 200.

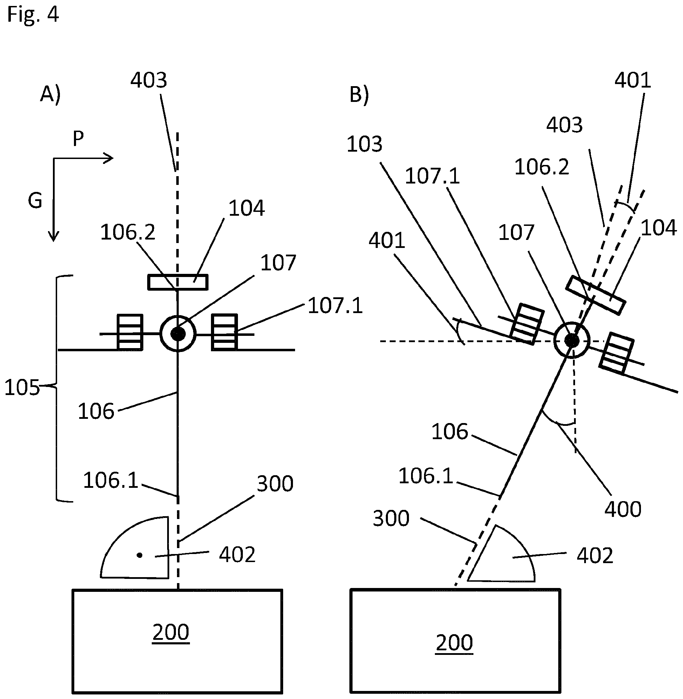

The tether 300 is connected with a first end 301 to a body 103 of the multi-copter 100 and with a second end 302 to the ground station 200. The connection of the tether 300 to the multi-copter 100 is such that the multi-copter 100 can determine an angle of incidence 400 of the tether 300 relative to a horizontal plane P or gravity G, which is equivalent. For this purpose, the tether 300 is mechanically connected with the first end 301 to an angle-sensor 104 that is configured to determine the angle of incidence 400 (cf. Fig. 4, panel B). From the determined angle of incidence 400 a position of the multi-copter 100 with respect to the ground station 200 is determined. The angle of incidence is determined for example by an inertial measurement unit 104 (IMU), i.e. the angle-sensor can be an IMU. The IMU 104 comprises a three axes gyroscope and a three axes accelerometer and might also comprise a compass. The three axes gyroscope is used for determining the angle of incidence 400 of the tether 300 (cf. Fig. 4). The compass is configured to determine the yaw axis 403 of the UAV 100.

In order for the angle-sensor 104 to detect and determine the angle of incidence 400, the tether 300 is connected to the angle-sensor 104 for example by means of an angle-adjustable mount assembly 105 that is configured to swivel or pivot for adopting the angle of incidence 400 without contributing or causing resistance or friction that could influence the angle of incidence 400. The angle-adjustable mount assembly 105 automatically, particularly by design, decouples the flight attitude of the UAV 100 from the angle-sensor 104. For example, during strong side winds the multi-copter might assume an angle 401 relative to the horizon, i.e. the multi-copter is tilted around the roll and/or the pitch axis such that the yaw axis 401 is not pointing along gravity G anymore. Nonetheless, due to the mount assembly 105, the angle of incidence can be still determined correctly as the tilt around the roll and/or pitch axis is compensated at the mount assembly 105 such that the angle-sensor 104 remains unaffected.

The angle of incidence 400 is for example defined by an angle of the tether 300 with respect to a horizontal plane P that extends orthogonal to the gravitational pull G.

The angle of incidence 400 can also be measured with respect to the body 103 of the multi-copter 100. However, this might require an additional instrument for taking into account an angle 401 of the body 103 of the multi-copter 100 with respect to the horizontal plane P, as the body 103 of the multi-copter 100 might not extend parallel to the horizontal plane P at all times during flight. From both angles the angles the angle of incidence 400 relative to the horizontal plane P can be determined.

The mount assembly 105 comprises a rigid elongated member 106 that points essentially downwards from the multi-copter 100 towards the ground 2. The tether 300 is attached with its first end 301 to the first (lower) end 106.1 of the elongated member 106. The elongated member 106 is pivotally and rotatably connected to the body 103 of the multi-copter 100 at a pivot portion or pivot point 107. The elongated member 106 has an upper end 106.2 that is located at the multi-copter body 103, wherein the pivot point 107 is arranged between the first, i.e. lower end 106.1 and the second, i.e. upper end 106.2 of the elongated member 106. Therefore, any change of the angle of incidence 400 of the tether 300 causes the elongated member 106 to pivot or rotate around the pivot point 107. As a consequence, the second end 106.2 of the elongated member 106 will adopt a different position and can thus be used as an indicator of the angle of incidence 400. In the example, the inertial measurement unit 104 (IMU) is rigidly connected to the second end 106.2 of the elongated member 106 such that the IMU 104 is sensitive to the position, particularly the angle of the second end 106.2 of the elongated member 106 with respect to the pivot point 107 and therefore to the angle of incidence 400. The angle-sensor in this embodiment is the IMU 104. Moreover, the IMU 104 is sensitive, particularly only sensitive to the angle of incidence 400 relative to the horizontal plane P. This is particularly advantageous as the body 103 of the UAV 100 might adopt an angle 401 with respect to the horizontal plane P during flight, e.g. due to wind conditions or active flight (cf. Fig. 4, panel B).

The pivot portion 107 for example comprises a ball-bearing 107.1 that allows for an adoption of any solid angle of the elongated member 106 and the body 103 of the UAV 100.

Alternatively, the pivot portion 107 comprises a two axes gimbal 107.1 that pivotally holds the elongated member 106.

Therefore, the mount assembly 105 maps the angle of incidence 400 to the IMU 104 by means of the elongated member 106 and its relative arrangement with respect to the pivot portion 107.

The elongated member 106 is particularly a stiff straight rod that extends between 20 cm to 100 cm downwards from the multi-copter 100.

The data of the IMU 104 might be processed and/or evaluated by an evaluation module (not shown) on the multi-copter 100, particularly by a processor or a computer arranged on the multi-copter 100.

The multi-copter 100 has a further IMU (not shown) that can be used for gathering flight and pose information, i.e. flight attitude and velocity of the multi-copter 100. This second IMU is mandatorily rigidly connected to the body of the multi-copter 100 (and not a movable portion of the UAV).

The flexible tether 300 can be a simple rope, a nylon thread and/or comprises various different functionalities that might be comprised in dedicated cables (not shown) that are comprised by said tether 300.

For example, the tether 300 can comprise a communication cable that is configured to transmit control commands from the ground station 200 to the multi-copter 100.

This communication cable can be additionally shielded or configured such that electromagnetic interference from the environment is reduced.

Additionally, the tether 300 can comprise a data cable that is configured to transmit the IMU data and other data generated by the multi-copter 100 to the ground station 200 or a remote control.

The data cable can be the communication cable, particularly a glass-fiber cable.

Also, the tether 300 can comprise an electric cable configured to provide electricity to the multi-copter 100. In this embodiment, the ground station 200 comprises or is connected to an electric energy source (not shown) that is connected to said electric cable. The electric cable in turn connects to the multi-copter 100 and provides electricity to the electric components of the multi-copter 100, such as the motors for the rotors 102 and the electronic and electric components on the multi-copter 100.

This allows for a dramatically reduced weight of the multi-copter 100 while gaining an essentially unlimited operational flight time allowing long-term missions.

The ground station 200 comprises a tether drum 201 for rolling up and down the tether 300 such that a free length 3 of the tether 300 is adjustable. The tether drum 201 can be motorized.

The tether drum 201 comprises a wheel or a drum 201.1 for storing the rolled-up tether 300. From the tether drum 201 the tether 300 is guided to a receiving opening 202 of the ground station 200 through which the tether 300 exits and enters the ground station 200 for connecting with the multi-copter 100.

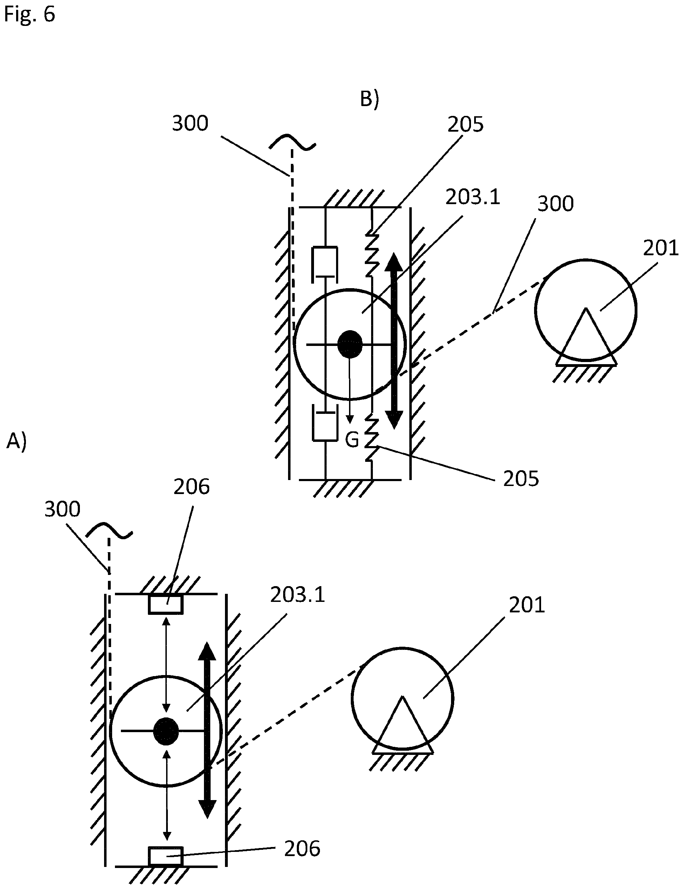

Along the path of the tether 300 inside the ground station 200 there is a preload assembly 203 (cf. Fig. 6) arranged that is configured to automatically adjust a load on the tether 300 extending between the multi-copter 100 and the ground station 200.

The preload assembly 203 comprises a movable member 203.1 that is in constant contact with the tether 300 and that can move such that the free path length between the tether drum 201 and the multi-copter 100 can be adjusted, i.e. elongated or shortened, by particularly translationally moving the movable member 203.1.

The movable member 203.1 is particularly a wheel that folds the tether path inside the ground station 200. The movable member 203.1 is particularly arranged on a guide (indicated by two arrows at the movable member 203.1) that allows for translational movement

In one embodiment the movable member 203.1 is vertically movable wherein in another embodiment the movable member 203.1 is horizontally movable.

The ground station 200 can comprise additional components 204 for guiding a defining a path of the tether 300 inside the ground station 200.

The preload assembly 203 allows for adjusting the free tether length 3 without activating the tether drum 201. As the tether drum 201 is usually a comparably heavy device which needs a strong motor to turn the drum 201.1, any actuation involving the tether drum 201 is usually only suitable for a coarse actuation of the tether length 3. The preload assembly 203 therefor allows for a more precise actuation as it comprises light weight components and does not carry any unrolled tether portions. The preload assembly 203 allows the system to quickly adjust rapidly changing loads on the tether 300, for example due to wind gusts or uneven terrain, in case the ground station is mounted on a vehicle.

The control of the preload assembly 203, and thus the load that is put on the tether 300, can be implemented in at least two ways according to the invention.

According to a first embodiment of the control of the preload assembly 203, the movable member 203.1 is guided vertically and the tether 300 extends between the ground 2 and a ground-facing portion of the movable member 203. Then, the tether 300 extends upwards towards the receiving opening 202 of the ground station 200.

The movable member 203 is pulled by means of gravity G and thus puts a load on the tether 300 that is determined by the weight of the movable member 203. This is a passive load control of the tether 300. Additionally, the movable member 203 can be attached to a spring damping assembly 205 that can compensate for sudden load changes on the tether 300. The spring damping assembly 205 can also be configured to for provide a preload on the tether 300.

Alternatively, the control of the preload can be achieved with a motorized movable member 203 that adopts a position along the guide by means of a motor control.

For this purpose, the preload assembly 203 might comprise a force sensor for determining a load on the tether 300.

The force sensor can be implemented or comprised by the spring damping assembly 205.

Additionally, the preload assembly can comprise a position sensor 206 that is configured to determine a position of the movable member 203.1 along the guide. Any adjustment of the position of the movable member 203.1 can be determined based on the position sensor's signals. For increased redundancy and precision two position sensors 206 can be used for determining the position of the movable member 203.1. The position sensor 206 is particularly an optical sensor.

A delicate phase during operation of aerial systems is the landing of the multi-copter.

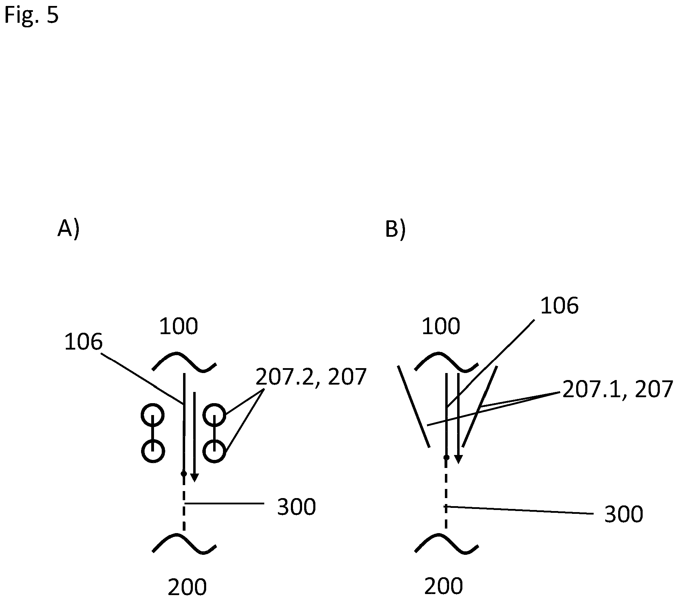

In order to provide an automated and facile landing mechanism the invention offers an elegant solution that makes use of the elongated member 106 in a second way which is shown in detail in Fig 1 and Fig. 5.

For this purpose, the ground station 200 has a centering structure 207 arranged at the receiving opening 202 for the tether 300.

In a first embodiment, the centering structure 207 comprises a centering channel 207.1 that extends along a vertical direction, i.e. parallel to gravity G (cf. Fig. 5, panel B).

The centering channel 207.1 may protrude upwards, while its upper opening corresponds to the receiving opening 202, or form a recess starting at the receiving opening 202 and extending inward the ground station 200.

The centering channel 207.1 is for example a rigid pipe structure having an essentially cylindrical cross-section through which the tether 300 extends (Fig. 5 panel B).

Preferably, the centering channel 207.1 is a funnel with a wider opening (i.e. the receiving opening) pointing upwards and the smaller opening being closer to ground 2.

During landing the elongated member 106 has to be brought to the receiving opening 202 of the centering channel 207.1 and then the tether 300 can be rolled-up such that the multi-copter 100 is pulled towards the centering channel 207.1, while the elongated member 106 limits lateral motion of the multi-copter 100 due to the engagement in the centering channel 207.1, which provides secure guidance during landing.

It is noted that the elongated member 106 is automatically pulled in the centering channel 207.1, particularly when the free length 3 of the tether 300 is shorter than the centering channel 207.1.

Alternatively, or additionally to the centering channel 207.1, the centering structure 207 can comprise a ball bearing 207.2 arranged at receiving opening 202 (cf. Fig. 5, panel A). Said ball bearing 207.2 reduces friction of the tether 300 when an angle 402 between ground station 200 and tether 300 becomes too small. The angle 402 between ground station 200 is particularly measured with respect to the horizontal plane P.

The angle 402 between the tether 300 and the ground station 200 can also be measured with a sensor (not shown) arranged at the receiving opening 202.

From the free length 3 of the tether 300 and the angle of incidence 400 measured at the multi-copter 100, a position of the multi-copter 100 relative to the ground station 200 can be determined.

Moreover, from the angle of incidence 400 also a yaw angle of the multi-copter 100 can be determined at least relative to the ground station 200.

The multi-copter 100 is configured to carry a payload such as a camera or other sensors during flight and acquired data that is sent to the ground station 200.

The system 1 can comprise a remote control (not shown) for control the multi-copter 100 and its components as well as the free tether length 3, such that with the remote control the position and orientation of the multi-copter 100 can be controlled. Additionally, the remote control can comprise a real-time data transmission from the payload sensors.

The remote control can be comprised by the ground station 200 or form a separate component of the system 1.

The invention provides an aerial system 1 that is capable to operate in adverse environments in a safe, reliable, and secure fashion.

### Reference numbers

- 1: system
- 2: ground
- 3: free length of tether
- P: horizontal plane
- G: Gravity
- 100: UAV
- 101: rotor arm
- 102: rotor
- 103: body of UAV
- 104: angle-sensor/lMU
- 105: mount assembly
- 106: elongated member
- 106.1: lower end of elongated member
- 106.2: upper end of elongated member
- 107: pivot point
- 107.1: ball bearing or gimbal
- 108: landing gear
- 200: ground station
- 201: tether drum
- 201.1: wheel/drum
- 202: receiving opening
- 203: preload assembly
- 203.1: movable member
- 204: additional components of preload assembly
- 205: spring damping assembly
- 206: position sensor
- 207: centering structure
- 207.1: centering channel
- 207.2: ball bearing of centering structure
- 300: tether
- 301: first end of tether
- 302: second end of tether
- 400: angle of incidence
- 401: angle of UAV body
- 402: angle between tether and ground station
- 403: yaw axis of the UAV

## Claims

1. A tethered automatic unmanned aerial vehicle system (1) comprising at least the components:
- an unmanned aerial vehicle (100), wherein the unmanned aerial vehicle (100) is a multi-copter with a body (103),
- a ground station (200),
- a flexible tether (300) that is connectable or that is connected to the unmanned aerial vehicle (100) and to the ground station (200), such that the unmanned aerial vehicle (100) is tethered to the ground station (200),
wherein the unmanned aerial vehicle (100) comprises an angle-sensor (104) configured and arranged to determine an angle of incidence (400) between the tether (300) and gravity (G) or a horizontal plane (P) or the body (103) of the multi-copter, such as to determine from the detected angle of incidence (400) at least an angular position of the unmanned aerial vehicle (100) with respect to the ground station (200), wherein the ground station (200) is configured to preload the tether (300), when the system (1) is in operation, such that the detected angle of incidence (400) is indicative of the angular position of the unmanned aerial vehicle (100) with respect to the ground station (200) or gravity (G),
**characterized in that**
the ground station (200) comprises a preload assembly (203) with a movable member (203.1) that is arranged in contact with the tether (300) and that is configured to alter a tether path length of an adjustable tether path in the ground station (200), wherein the movable member (203.1) is arranged translationally movable on a guide of the preload assembly (203) that allows the tether path length in the ground station (200) to be adjusted in length by moving the movable member (203.1) along the guide, such that a load on the tether (300) can be adjusted by moving the movable member (203.1).

2. The system (1) according to claim 1, wherein the tether (300) is connected to the unmanned aerial vehicle (100) by an angle-adjustable mount assembly (105), such as a pivot assembly or a swivel assembly, wherein the angle-adjustable mount assembly (105) comprises an inertial measurement unit (104, IMU), wherein the angle-adjustable mount assembly (105) is configured to map the angle of incidence (400) to the IMU (104) such that the IMU (104) assumes a corresponding angle with the angle-adjustable mount assembly (105).

3. The system (1) according to one of the preceding claims, wherein the angle-sensor (104) is arranged to detect the angle of incidence (400), wherein the angle-sensor (104) is a gyroscope and/or an optical sensor.

4. The system (1) according to one of the preceding claims, wherein the tether (300) comprises a data cable for transmitting a sensor signal or sensor data to the ground station (200).

5. The system (1) according to one of the preceding claims, wherein the ground station (200) comprises a rotatably mounted tether drum (201) configured to roll up and to roll off the tether (300) from the tether drum (201) such as to adjust a free tether length (3) of the tether (300) between the unmanned aerial vehicle (100) and the ground station (200).

6. The system (1) according to one of the preceding claims, wherein the preload assembly (105) comprises a position sensor (206) configured to determine a position of the movable member (203.1) in the guide.

7. The system (1) according to one of the preceding claims, wherein the preload assembly (105) comprises a load sensor (205) configured to determine a tether load of the tether (300) between the ground station (200) and the unmanned aerial vehicle (100), wherein the system (1) is configured to adjust the tether load, such that the tether load remains higher than a predefined minimum tether load.

8. The system (1) according to one of the preceding claims, wherein the tether path inside the ground station (200) exhibits a local minimum located such in the tether path that a fluid, such as water, on the tether accumulates at the minimum for dripping off at the minimum.

9. The system (1) according to one of the preceding claims, wherein the ground station (200) is arranged or comprised by a ground vehicle, such as a car or a ship.

10. The system (1) according to any of the preceding claims, wherein the ground station (200) comprises a receiving opening (202) for the tether (300) through which the tether (300) exits the ground station (200) towards the unmanned aerial vehicle (100), wherein at the receiving opening (202) the ground station (200) comprises a centering channel (207.1) extending essentially vertically from the receiving opening (202), wherein the centering channel (207.1) is configured to receive an elongated member (106) of the unmanned aerial vehicle (100) such that a lateral position of the unmanned aerial vehicle (100) is stabilized during landing.

11. The system (1) according to claim 10, wherein the centering channel (207.1) or the receiving opening (202) comprises a ball bearing (207.2) for guiding the elongated member (106) at reduced friction.

12. Method for operating a tethered unmanned aerial vehicle (100) with a system (1) according any of the preceding claims, the method comprising the steps of:
- Determining an angle of incidence (400) of the tether (300) and the unmanned aerial vehicle (100) on the unmanned aerial vehicle (100),
- Determining a free tether length (3) between the unmanned aerial vehicle (100) and the ground station (200),
- Determining from the angle of incidence (400) and the free tether length (3) a three-dimensional position of the unmanned aerial vehicle (100) with respect to the ground station (200).

13. Method according to claim 12, wherein the method comprises the step of adjusting a determined tether load such that the determined tether load is larger than a minimum tether load.

## Patentansprüche

1. Ein angebundenes automatisches unbemanntes Luftfahrzeugsystem (1), das mindestens die folgenden Komponenten umfasst:
- ein unbemanntes Luftfahrzeug (100), wobei das unbemannte Luftfahrzeug (100) ein Multikopter mit einem Körper (103) ist,
- eine Bodenstation (200),
- ein flexibles Halteseil (300), das mit dem unbemannten Luftfahrzeug (100) und der Bodenstation (200) verbunden werden kann oder verbunden ist, so dass das unbemannte Luftfahrzeug (100) an der Bodenstation (200) angebunden ist,
wobei das unbemannte Luftfahrzeug (100) einen Winkelsensor (104) umfasst, der so konfiguriert und angeordnet ist, dass er einen Einfallswinkel (400) zwischen dem Halteseil (300) und der Schwerkraft (G) oder einer horizontalen Ebene (P) oder dem Körper (103) des Multikopters bestimmt, um aus dem erfassten Einfallswinkel (400) zumindest eine Winkelposition des unbemannten Luftfahrzeugs (100) in Bezug auf die Bodenstation (200) zu bestimmen, wobei die Bodenstation (200) so konfiguriert ist, dass sie das Halteseil (300) vorspannt, wenn das System (1) in Betrieb ist, so dass der erfasste Einfallswinkel (400) ein Indikator für die Winkelposition des unbemannten Luftfahrzeugs (100) in Bezug auf die Bodenstation (200) oder die Schwerkraft (G) ist,
**dadurch gekennzeichnet, dass**
die Bodenstation (200) eine Vorspannanordnung (203) mit einem beweglichen Element (203.1) umfasst, das in Kontakt mit dem Halteseil (300) angeordnet ist und das konfiguriert ist, um eine Halteseilweglänge eines einstellbaren Halteseilweges in der Bodenstation (200) zu ändern, wobei das bewegliche Element (203. 1) translatorisch beweglich auf einer Führung der Vorspannanordnung (203) angeordnet ist, die es ermöglicht, die Länge des Leinenwegs in der Bodenstation (200) durch Bewegen des beweglichen Elements (203.1) entlang der Führung einzustellen, so dass eine Last auf das Halteseil (300) durch Bewegen des beweglichen Elements (203.1) eingestellt werden kann.

2. Das System (1) gemäß Anspruch 1, wobei das Halteseil (300) mit dem unbemannten Luftfahrzeug (100) durch eine winkelverstellbare Montageanordnung (105), wie beispielsweise eine Schwenkanordnung oder eine Drehanordnung, verbunden ist, wobei die winkelverstellbare Montageanordnung (105) eine Inertialmesseinheit (104, IMU) umfasst, wobei die winkelverstellbare Montageanordnung (105) so konfiguriert ist, dass sie den Einfallswinkel (400) auf die IMU (104) abbildet, so dass die IMU (104) einen entsprechenden Winkel mit der winkelverstellbaren Halterungsanordnung (105) einnimmt.

3. Das System (1) gemäß einem der vorhergehenden Ansprüche, wobei der Winkelsensor (104) angeordnet ist, um den Einfallswinkel (400) zu erfassen, wobei der Winkelsensor (104) ein Gyroskop und/oder ein optischer Sensor ist.

4. Das System (1) gemäß einem der vorhergehenden Ansprüche, wobei das Halteseil (300) ein Datenkabel zur Übertragung eines Sensorsignals oder von Sensordaten an die Bodenstation (200) umfasst.

5. Das System (1) gemäß einem der vorhergehenden Ansprüche, wobei die Bodenstation (200) eine drehbar gelagerte Halteseiltrommel (201) umfasst, die so konfiguriert ist, dass sie das Halteseil (300) von der Halteseiltrommel (201) auf- und abrollt, um eine freie Seillänge (3) des Halteseils (300) zwischen dem unbemannten Luftfahrzeug (100) und der Bodenstation (200) einzustellen.

6. Das System (1) gemäß einem der vorhergehenden Ansprüche, wobei die Vorspannanordnung (105) einen Positionssensor (206) umfasst, der so konfiguriert ist, dass er eine Position des beweglichen Elements (203.1) in der Führung bestimmt.

7. System (1) gemäß einem der vorhergehenden Ansprüche, wobei die Vorlastanordnung (105) einen Lastsensor (205) umfasst, der so konfiguriert ist, dass er eine Halteseillast des Halteseils (300) zwischen der Bodenstation (200) und dem unbemannten Luftfahrzeug (100) bestimmt, wobei das System (1) so konfiguriert ist, dass es die Halteseillast so einstellt, dass die Halteseillast höher als eine vordefinierte Mindesthalteseillast bleibt.

8. Das System (1) gemäß einem der vorhergehenden Ansprüche, wobei der Halteseilweg innerhalb der Bodenstation (200) ein lokales Minimum aufweist, das sich so auf dem Halteseilweg befindet, dass sich ein Fluid, wie z.B. Wasser, auf dem Halteseil an dem Minimum ansammelt, um an dem Minimum abzutropfen.

9. Das System (1) gemäß einem der vorhergehenden Ansprüche, wobei die Bodenstation (200) in einem Bodenfahrzeug, wie z.B. einem Auto oder einem Schiff, angeordnet ist oder dieses umfasst.

10. Das System (1) gemäß irgendwelchen der vorhergehenden Ansprüche, wobei die Bodenstation (200) eine Aufnahmeöffnung (202) für das Halteseil (300) aufweist, durch die das Halteseil (300) die Bodenstation (200) in Richtung des unbemannten Luftfahrzeugs (100) verlässt, wobei die Bodenstation (200) an der Aufnahmeöffnung (202) einen Zentrierkanal (207.1) umfasst, der sich im Wesentlichen vertikal von der Aufnahmeöffnung (202) erstreckt, wobei der Zentrierkanal (207.1) so konfiguriert ist, dass er ein längliches Element (106) des unbemannten Luftfahrzeugs (100) aufnimmt, so dass eine seitliche Position des unbemannten Luftfahrzeugs (100) während der Landung stabilisiert wird.

11. Das System (1) gemäß Anspruch 10, wobei der Zentrierkanal (207.1) oder die Aufnahmeöffnung (202) ein Kugellager (207.2) zur Führung des langgestreckten Elements (106) bei reduzierter Reibung aufweist.

12. Verfahren zum Betreiben eines angebundenen unbemannten Luftfahrzeugs (100) mit einem System (1) nach einem der vorhergehenden Ansprüche, wobei das Verfahren die folgenden Schritte umfasst:
- Ermitteln eines Auftreffwinkels (400) des Halteseils (300) und des unbemannten Luftfahrzeugs (100) auf das unbemannte Luftfahrzeug (100),
- Bestimmen einer freien Halteseillänge (3) zwischen dem unbemannten Luftfahrzeug (100) und der Bodenstation (200),
- Ermitteln einer dreidimensionalen Position des unbemannten Luftfahrzeugs (100) in Bezug auf die Bodenstation (200) aus dem Einfallswinkel (400) und der freien Halteseillänge (3).

13. Verfahren gemäß Anspruch 12, wobei das Verfahren den Schritt umfasst, eine ermittelte Halteseillast so einzustellen, dass die ermittelte Halteseillast größer ist als eine minimale Halteseillast.

## Revendications

1. Système de véhicule aérien sans pilote automatique captif (1) comprenant au moins les composants :
- un véhicule aérien sans pilote (100), dans lequel le véhicule aérien sans pilote (100) est un multicoptère avec un corps (103),
- une station au sol (200),
- une attache flexible (300) qui peut être connectée ou qui est connectée au véhicule aérien sans pilote (100) et à la station au sol (200) de sorte que le véhicule aérien sans pilote (100) est attaché à la station au sol (200),
dans lequel le véhicule aérien sans pilote (100) comprend un capteur d'angle (104) configuré et agencé pour déterminer un angle d'incidence (400) entre l'attache (300) et la gravité (G) ou un plan horizontal (P) ou le corps (103) du multicoptère de manière à déterminer à partir de l'angle d'incidence détecté (400) au moins une position angulaire du véhicule aérien sans pilote (100) par rapport à la station au sol (200), dans lequel la station au sol (200) est configurée pour précontraindre l'attache (300), lorsque le système (1) est en cours d'opération, de sorte que l'angle d'incidence détecté (400) est indicateur de la position angulaire du véhicule aérien sans pilote (100) par rapport à la station au sol (200) ou la gravité (G),
**caractérisé en ce que**
la station au sol (200) comprend un ensemble de précontrainte (203) avec un élément mobile (203.1) qui est agencé en contact avec l'attache (300) et qui est configuré pour altérer une longueur de trajet d'attache d'un trajet d'attache ajustable dans la station au sol (200), dans lequel l'élément mobile (203.1) est agencé de manière mobile en translation sur un guide de l'ensemble de précontrainte (203) qui permet à la longueur de trajet d'attache dans la station au sol (200) d'être ajustée en longueur en déplaçant l'élément mobile (203.1) le long du guide de sorte qu'une charge sur l'attache (300) peut être ajustée en déplaçant l'élément mobile (203.1).

2. Système (1) selon la revendication 1, dans lequel l'attache (300) est connectée au véhicule aérien sans pilote (100) par un ensemble de montage à angle ajustable (105), tel qu'un ensemble de pivot ou un ensemble articulé, dans lequel l'ensemble de montage à angle ajustable (105) comprend un module de mesure inertielle (104, IMU), dans lequel l'ensemble de montage à angle ajustable (105) est configuré pour établir une correspondance entre l'angle d'incidence (400) et le IMU (104) de sorte que le IMU (104) adopte un angle correspondant avec l'ensemble de montage à angle ajustable (105).

3. Système (1) selon une des revendications précédentes, dans lequel le capteur d'angle (104) est agencé pour détecter l'angle d'incidence (400), dans lequel le capteur d'angle (104) est un gyroscope et/ou un capteur optique.

4. Système (1) selon une des revendications précédentes, dans lequel l'attache (300) comprend un câble de données pour transmettre un signal de capteur ou des données de capteur à la station au sol (200).

5. Système (1) selon une des revendications précédentes, dans lequel la station au sol (200) comprend un tambour d'attache monté à rotation (201) configuré pour enrouler et pour dérouler l'attache (300) du tambour d'attache (201) de manière à ajuster une longueur d'attache libre (3) de l'attache (300) entre le véhicule aérien sans pilote (100) et la station au sol (200).

6. Système (1) selon une des revendications précédentes, dans lequel l'ensemble de précontrainte (105) comprend un capteur de position (206) configuré pour déterminer une position de l'élément mobile (203.1) dans le guide.

7. Système (1) selon une des revendications précédentes, dans lequel l'ensemble de précontrainte (105) comprend un capteur de charge (205) configuré pour déterminer une charge d'attache de l'attache (300) entre la station au sol (200) et le véhicule aérien sans pilote (100), dans lequel le système (1) est configuré pour ajuster la charge d'attache de sorte que la charge d'attache reste supérieure à une charge d'attache minimale prédéfinie.

8. Système (1) selon une des revendications précédentes, dans lequel le trajet d'attache à l'intérieur de la station au sol (200) présente un minimum local situé de telle manière dans le trajet qu'un fluide, tel que de l'eau, sur l'attache s'accumule au niveau du minimum pour s'égoutter au niveau du minimum.

9. Système (1) selon une des revendications précédentes, dans lequel la station au sol (200) est agencée ou comprise par un véhicule au sol, tel qu'une voiture ou un navire.

10. Système (1) selon l'une quelconque des revendications précédentes, dans lequel la station au sol (200) comprend une ouverture de réception (202) pour l'attache (300) à travers laquelle l'attache (300) sort de la station au sol (200) vers le véhicule aérien sans pilote (100), dans lequel au niveau de l'ouverture de réception (202), la station au sol (200) comprend un canal de centrage (207.1) s'étendant essentiellement verticalement depuis l'ouverture de réception (202), dans lequel le canal de centrage (207.1) est configuré pour recevoir un élément allongé (106) du véhicule aérien sans pilote (100) de sorte qu'une position latérale du véhicule aérien sans pilote (100) est stabilisée au cours de l'atterrissage.

11. Système (1) selon la revendication 10, dans lequel le canal de centrage (207.1) ou l'ouverture de réception (202) comprend un roulement à billes (207.2) pour guider l'élément allongé (106) à une friction réduite.

12. Procédé d'opération d'un véhicule aérien sans pilote captif (100) avec un système (1) selon l'une quelconque des revendications précédentes, le procédé comprenant les étapes consistant à :
- déterminer un angle d'incidence (400) de l'attache (300) et du véhicule aérien sans pilote (100) sur le véhicule aérien sans pilote (100),
- déterminer une longueur d'attache libre (3) entre le véhicule aérien sans pilote (100) et la station au sol (200),
- déterminer à partir de l'angle d'incidence (400) et la longueur d'attache libre (3) une position tridimensionnelle du véhicule aérien sans pilote (100) par rapport à la station au sol (200).

13. Procédé selon la revendication 12, dans lequel le procédé comprend l'étape d'ajustement d'une charge d'attache déterminée de sorte que la charge d'attache déterminée est supérieure à une charge d'attache minimale.
